# EUROPEAN PATENT APPLICATION

(11) **EP 1 069 782 A2**
(43) Date of publication of application: **17.01.2001**
(21) Application number: 99115391.7
(22) Date of filing: 04.08.1999
(51) Int. Cl.: H04N 9/82

(54) **Method and apparatus for storing digital data transmitted together with an analog video signal**

(30) Priority: 15.07.1999 EP 99113874
(71) Applicant: DEUTSCHE THOMSON-BRANDT GMBH, 78048 Villingen-Schwenningen (DE)
(72) Inventor: Winter, Marco, 30173 Hannover (DE); Adolph, Dirk, 30952 Ronnenberg (DE); Keesen, Werner, 30173 Hannover (DE); Schiller, Harald, 30539 Hannover (DE)
(74) Representative: Hartnack, Wolfgang, Dipl.-Ing.

(57) **Abstract**

Analog TV systems use the lines of the VBI for the transmission of data for special applications and services like Teletext, WSS or EPG. For digitally recording of analog TV signals the MPEG2 video encoding can be used, e.g. by the so-called DVD-VR which shall replace the VCRs used nowadays. However, the proposals for DVD-VRs up to now do neither show any possibility nor the recognition of the need to store also VBI data with a DVD-VR inside the MPEG video bitstream. According to the invention the VBI data are stored inside the user_data (a) of the MPEG bitstream. This allows to reproduce the VBI data during playback, which is e.g. useful for subtitles.

## Description

The invention relates to a method and an apparatus for storing digital data, which are transmitted together with an analog video signal, in an MPEG bitstream e.g. for storing teletext data with DVD video recording.

### Prior art

For analog TV systems like PAL, NTSC or SECAM the lines of the so-called Vertical Blanking Interval (VBI) do not comprise video signals but contain data for special applications and services. Services using the transmission within the VBI are e.g. Teletext (in Germany known as Videotext), the Video Programming System (VPS) for simplification of VCR recording, the Wide Screen Signaling (WSS) for picture aspect ratio signaling and the Electronic Program Guide (EPG). Teletext data can be transmitted in the lines 20, 21, 333 and 334 and optionally also in lines 11 to 15 and 323 to 328 of the video frame. The VPS signal is transmitted in line 16, the WSS signal in line 23, the EPG data via the above mentioned Teletext lines.

For the compression of video sequences it is well known to make use of the encoding according to the MPEG2 Part 2: video standard as specified in ISO/IEC 13818-2. The data are encoded hierarchically in six layers, which are the sequence layer, GOP (Group OF Picture) layer, picture layer, slice layer, macroblock layer and block layer. These different layer allow suited access mechanisms and to separate the basic elements in the generated data stream. Furthermore, the specification provides the utilization of data, in the following referred to as user_data, which can be defined by users for their specific applications with respect to the video data.

The MPEG2 video encoding can also be used for digitally recording of analog TV signals, wherein as recording media tapes can be used as well as optical discs. Especially it is planned to introduce a so-called DVD-VR (DVD Video Recording) which shall replace the VCRs used nowadays. However, the proposals up to now do neither show any possibility nor the recognition of the need to store also VBI data with a DVD-VR inside the MPEG video bitstream.

### Invention

The invention is based on the object of specifying a method for storing digital data, which are transmitted together with an analog video signal, especially within the VBI of an analog video signal, inside a bitstream of bit-rate saving encoded video signals. This object is achieved by means of the method specified in claim 1.

It is a further object of the invention to disclose an apparatus which utilises the inventive method. This object is achieved by the apparatus disclosed in claim 12.

In principle, the method for storing digital data, which are transmitted together with an analog video signal, consists in the fact that the digital data are stored inside the user_data of a bitstream of bit-rate saving encoded video signals.

In that way, a decoder for bit-rate saving encoded video signals, e.g. an MPEG decoder, is able to reproduce the digital data during playback. This is e.g. useful for subtitles, which are transmitted via Teletext in the VBI and shall also be available at playback after digital recording.

In an advantageous manner, the digital data are stored inside an MPEG video bitstream by using the user data of the extensions_and_user_data of the picture layer between the picture_coding_extension and the picture_data.

In an advantageous development the digital data are stored along with the picture_header they are belonging to.

If the digital data are transmitted within the Vertical Blanking Interval, it may be particularly advantageous when the user_data contain all Television VBI data of the MPEG picture to which this user_data belongs.

Furthermore, it may be particularly advantageous, if the user_data comprise a user_data_start_code identifying the beginning of user data, a television_vbi_data_indicator and television VBI lines comprising the data of the television VBI line.

In an advantageous development the userdata start code field has the value 0000 01B2h, the television_vbi_data indicator is set to 4342h.

Furthermore, it may be advantageous, if the television VBI line comprise a line_number_code, a field television_vbi_data_line_length, a field television vbi_line_data comprising the teletext data seperated by marker bits and a field marker_bits comprising marker bits for byte alignment.

Advantageously, the line_number_code is a 16-bit field, which indicates the video line number the analog signal is located in and wherein the field television_vbi_data_line_length is a 16-bit field, which indicates the number of bits located within the single television line.

Furthermore, if the digital data in the field television_vbi_line_data (g) are teletext data, these are advantageously stored in 22-bit data blocks and a 8-bit data block, wherein the data blocks are seperated by marker bits.

### Drawings

Exemplary embodiments of the invention are described with reference to the figures. These show in:
- Figure 1: the storage of teletext data in the user_data of the picture layer;
- Figure 2: a block diagram of an encoder for performing the storage of data in the user_data of the picture layer;
- Figure 3: the storage of WSS data in the user_data of the picture layer;
- Figure 4: the storage of VBID data in the user_data of the picture layer.

### Exemplary embodiments

According to the invention the Television VBI Data are stored inside the bitstream inside the user_data() of the extensions_and_user_data() between the picture_coding_extension() and the picture_data(). The Television VBI data are stored along with the picture_header() they are belonging to. Advantageously, the user_data() shall contain all Television VBI data of the MPEG picture to which this user_data() belongs.

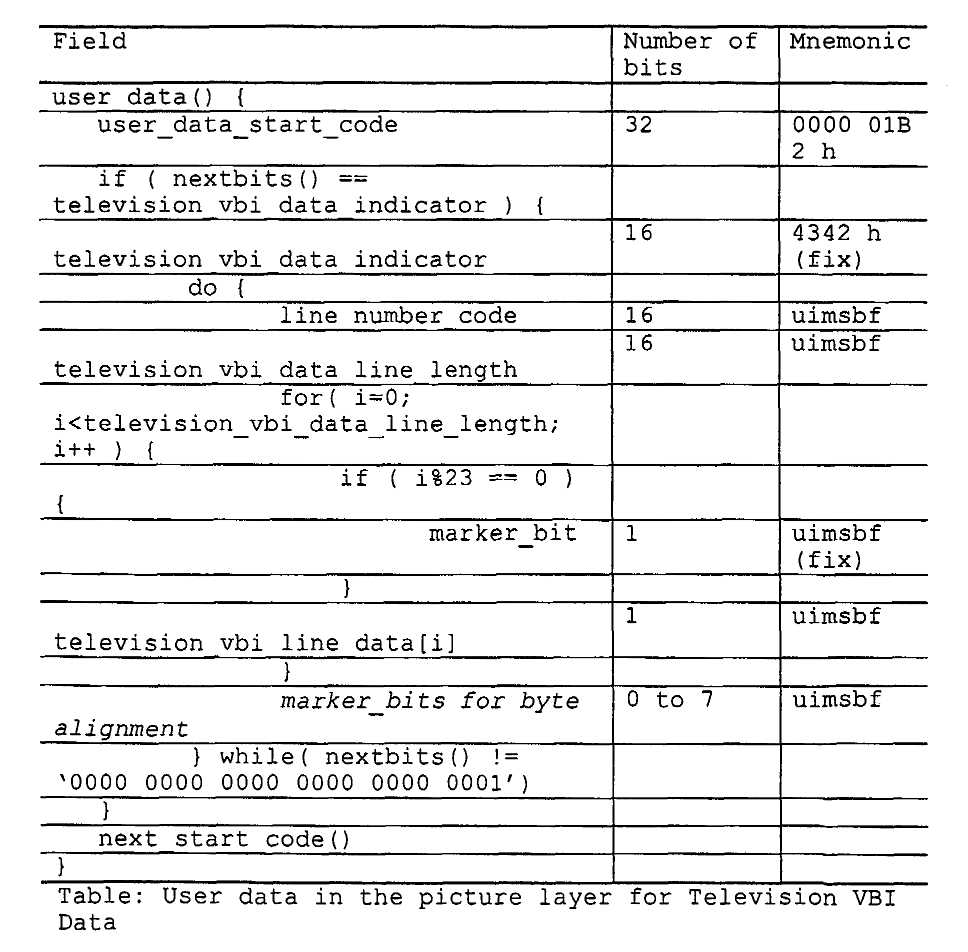

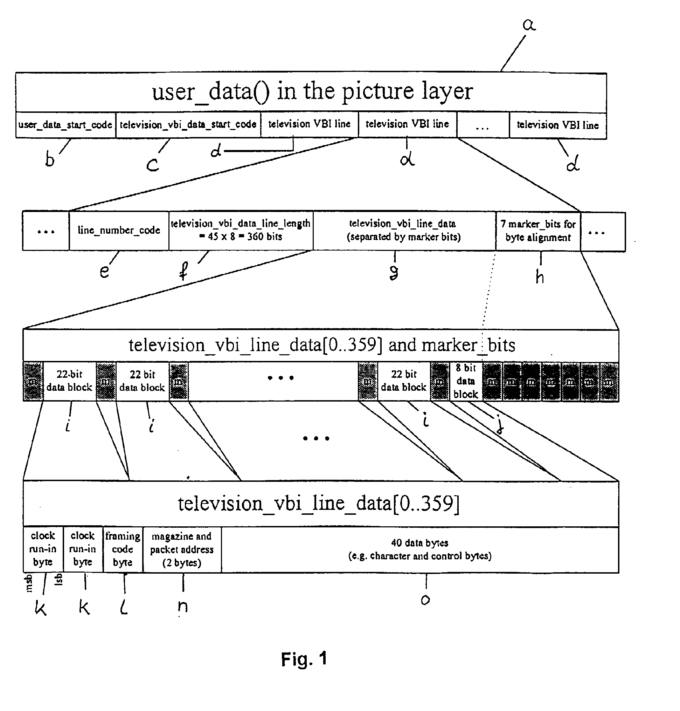

The format to store the television VBI data inside the user_data() is described by the table above and is also shown in figure 1.

The user_data a in the picture layer comprise a user_data_start_code b, a television_vbi_data_indicator c and television VBI lines d comprising the data of the television VBI line. The user_data_start_code field b has the value (0000 01B2h) in accordance with MPEG ISO/IEC 13818-2. It identifies the beginning of user data. The user data continues until receipt of another start code. The television_vbi_data_indicator c is set to (4342h) to indicate the following television VBI data line.

The television VBI line d comprise a line_number_code e, a field television_vbi_data_line_length f, a field television_vbi_line_data g comprising the teletext data seperated by marker bits m and a field marker_bits h comprising marker bits for byte alignment. The line_number_code e is a 16-bit field, which indicates the video line number the analog signal is located in. The value of line_number_code is in the range 1 ≤ *line_number_code ≤* 625 as defined within the DVD Specification for Read-Only Disc / Part 3, Version 1.0 in Figure 5.4.3.2-4: "SP period (TV system with 625/50)". The television VBI data lines shall occur in ascending *line_number_code* order inside the same user_data(). Further restrictions of the range for the *line_number_code* might be possible and are application specific. Normally, video lines of the vertical blanking interval (VBI) will be used for television VBI data lines (e.g. standard teletext), i.e. the video line numbers 6 to 23 in the top field and 318 to 335 in the bottom field. The field television_vbi_data_line_length f is a 16-bit field, which indicates the number of bits located within the single television line, i.e. the television line with the number *line_number_code* contains *television_vbi_data_line_length* data bits.

The field television_vbi_line_data[i] g contains one bit of data of the single television line.
*television_vbi*_*line_data [0]* is the msb (most significant bit) and
*television_vbi*_*line_data[television_vbi_data_line_length-1]* the lsb (least significant bit) of the single television line. The index i is in the range 0 ≤ i < *television_vbi_data_line_length.*

The field marker_bits h consist of a various number of '1b' values. The size of this field is 1 ≤ (bit size of *"marker_bits for alignment"*) ≤ 8 and is chosen in such a way that the MPEG video bitstream becomes byte aligned after this field, i.e. that the position of a bit in the coded bitstream is a multiple of 8 bits from the first bit in the stream.

The true teletext data are transmitted in the 22-bit data blocks i and the 8-bit data block j, wherein the data blocks are seperated by marker bits.

The television_vbi_line data[] of one television line shall contain the complete 45 data bytes of the teletext signal, i.e. the clock run-in k, the framing code l, the magazine and packet address n and the data bytes (e.g. character and control bytes) o. Therefore, television_vbi_line_data [0] is the msb of the first clock run-in value and television_vbi_line_data [45x8 - 1] is the lsb of the last (40-th) character of this teletext line.

VPS, WSS, EPG or Enhanced Teletext data can be stored in a way analog to teletext, i.e. byte for byte inside the television_vbi_line_data[]. However, Enhanced Teletext data may be stored inside (lines 6 to 23 and 318 to 335) and outside (lines 23 to 310 and 336 to 623) of the VBI.

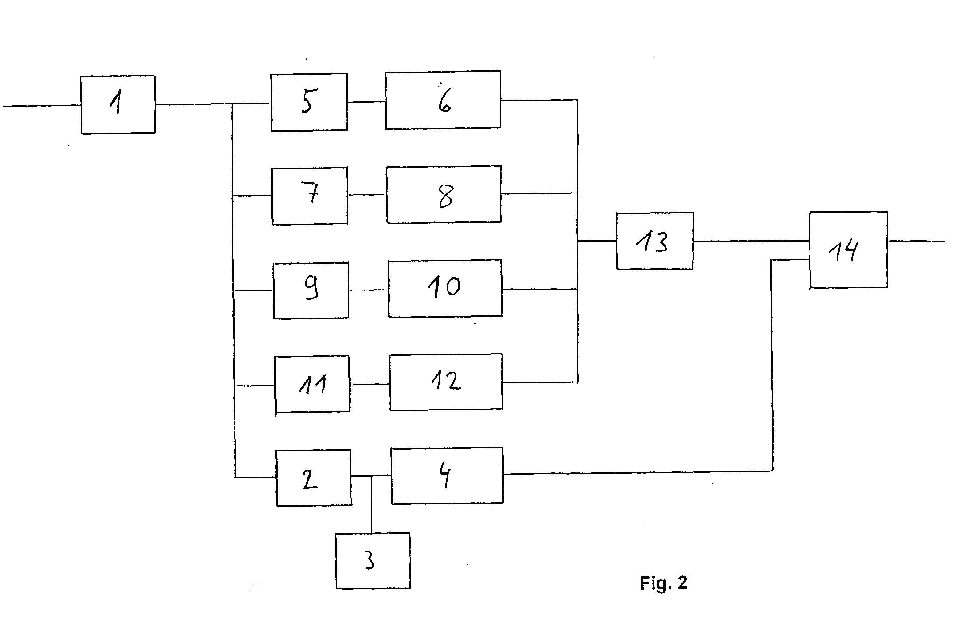

Figure 2 shows a block diagram of an exemplary embodiment of an encoder for performing the storage of data in the user_data of the picture layer. The analog TV signal is first of all converted by an Analog-to-Digital-Converter 1 into a digital signal. A video line detector 2 detects digital video signals which are comprised in the digital signal and supplies the video lines to a frame buffer 3. When the whole frame of a picture is stored in the frame buffer 3, MPEG encoding of this frame is performed by the MPEG encoder 4. The digital signal is also fed to a Teletext detector 5, VPS detector 7, EPG detector 9 and WSS detector 11. The various detectors check whether the respective data are included in the digital signal and supplies the detected signals to respective encoder units 6, 8, 10, 12, which encode these data as user_data in the picture layer. If several data lines are detected and encoded, these data are collected by a collector unit 13 within the user_data of the picture layer. Finally, the collected data are merged with the MPEG encoded video signal to the MPEG bitstream by a multiplexer 14. Although the various detectors as well as the various encoders are shown as separate units, they also can be integrated into a single unit. Also it is possible to implement not all of those detectors and encoders, respectively.

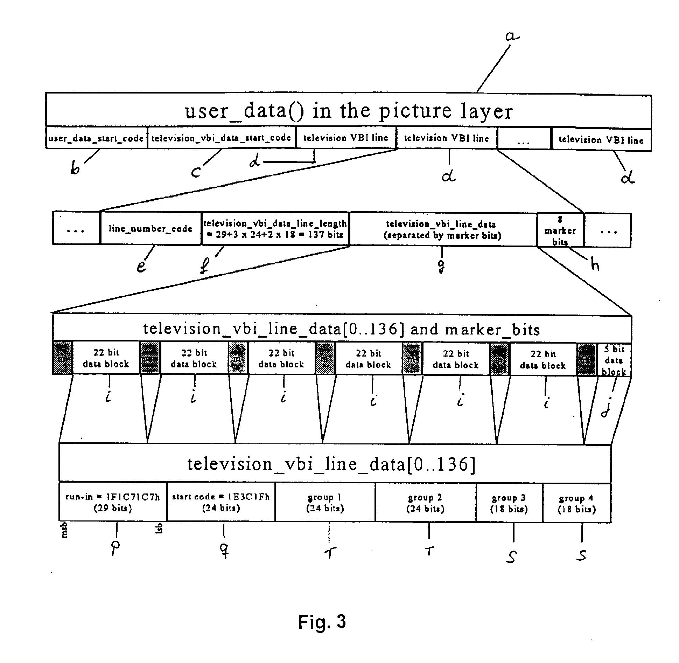

The format to store WSS data inside the user_data() is shown in figure 3. The Wide Screen Signaling (WSS) data are transmitted as a data burst in the first part of video line 23 (see ETSI, EN 300 294, V1.3.2). The resulting data consists of a run-in p, a start code q and four data groups comprising 24 bits groups r and 18 bits groups s. These information is stored inside the user_data() of the picture layer in 22-bit data blocks i and a 5-bit data block j seperated by marker bits m. Furthermore, the field marker_bits h consist for this embodiment of 8 bits for byte alignment.

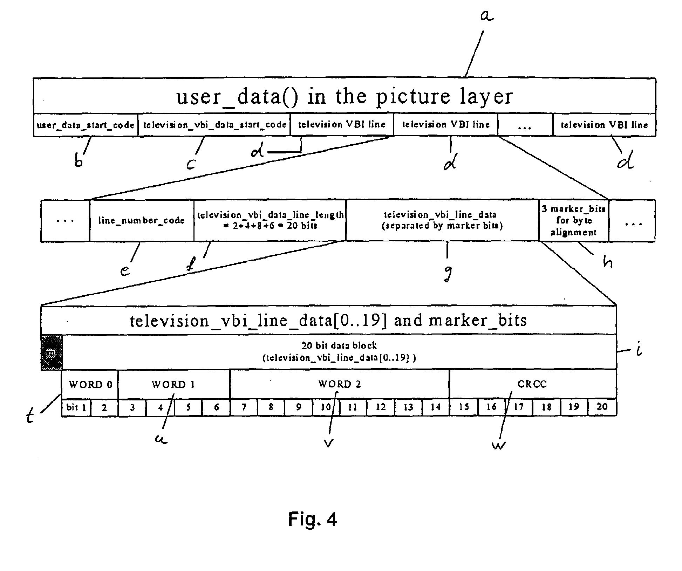

The format to store Video and Accompanied Data Using the Vertical Blanking Interval (VBID) inside the user_data() is shown in figure 4. The VBID are transmitted as a data burst in the video line 20 and 283 for the 525/60 TV systems (see CEI/IEC 61880, 1998-01, section 3). The resulting data consists of three words (WORD 0, 1 and 2) t, u, v and a CRCC marked with w. All these information can be stored inside the user_data() of the picture layer as a 20 bit data block comprising the three words and the CRCC with a preceding marker bit m. The field marker_bits h consists here of 3 bits for byte alignment.

The invention can advantageously be used for storing Teletext, VPS, WSS, EPG, VBID within the MPEG Video Bitstream, but also applies to storing of any other kind of digital data which are transmitted together with analog video signals.

The invention can be implemented in any kind of digital recording devices like DVD-VRs etc.

## Claims

1. Method for storing digital data, which are transmitted together with an analog video signal, **characterized in that** the digital data are stored inside the user data of a bitstream of bit-rate saving encoded video signals.

2. Method according to claim 1, **wherein** the digital data are stored inside an MPEG video bitstream by using the user_data of the extensions_and_user_data of the picture layer between the picture_coding_extension and the picture_data.

3. Method according to claim 2, **wherein** the digital data are stored along with the picture_header they are belonging to.

4. Method according to claim 3, **wherein** the digital data are transmitted within the Vertical Blanking Interval and wherein the user_data (a) shall contain all Television VBI data of the MPEG picture to which this user_data (a) belongs.

5. Method according to any of claims 2 to 4, **wherein** the user_data (a) comprise a user_data_start_code (b) identifying the beginning of user data, a television_vbi_data_indicator (c) and television VBI lines (d) comprising the data of the television VBI line.

6. Method according to claim 3, **wherein** the user_data_start_code field (b) has the value 0000 01B2h and the television_vbi_data_indicator (c) is set to 4342h.

7. Method according to claim 5 or 6, **wherein** the television VBI line (d) comprise a line_number_code (e), a field television_vbi_data_line_length (f), a field television_vbi_line_data (g) comprising the digital data seperated by marker bits (m) and a field marker_bits (h) comprising marker bits (m) for byte alignment.

8. Method according to claim 7, **wherein** the line_number_code (e) is a 16-bit field, which indicates the video line number the analog signal is located in and wherein the field television_vbi_data_line_length (f) is a 16-bit field, which indicates the number of bits located within the single television line.

9. Method according to claim 8, **wherein** the digital data in the field television_vbi_line_data (g) are teletext data, which are stored in 22-bit data blocks (i) and a 8-bit data block (j) and wherein the data blocks are seperated by marker bits (m).

10. Method according to claim 8, **wherein** the digital data in the field television_vbi_line_data (g) are Wide Screen Signaling data, which are stored in 22-bit data blocks (i) and a 5-bit data block (j) and wherein the data blocks are seperated by marker bits (m).

11. Method according to claim 8, **wherein** the digital data in the field television_vbi_line_data (g) are Video and Accompanied Data Using the Vertical Blanking Interval, which are stored in a 20-bit data block (i) preceded by a marker bit (m).

12. Apparatus for performing the method according to claim 1.
